# FASCICULE DE BREVET EUROPEEN

(11) **EP 0 447 280 B1**
(45) Date de publication et mention de la délivrance du brevet: **12.07.1995**
(21) Numéro de dépôt: 91400425.4
(22) Date de dépôt: 18.02.1991
(51) Int. Cl.: C08L 95/00, C10C 3/02, C08J 11/06

(54) **Compositions bitumineuses renfermant des résidus de polymères thermoplastiques avec des mousses polyuréthanes et des résines thermodurcies, ainsi que leur procédé de production**
Bituminöse Zusammensetzungen enthaltend Rückstände von thermoplastischen Polymeren mit Polyurethanschäumen und hitzehärtbaren Harzen und Verfahren zu ihrer Herstellung
Bituminous compositions containing thermoplastic polymers residues with polyurethane foams and thermoset resins, and method for their manufacture

(30) Priorité: 21.02.1990 FR 9002136
(43) Date de publication de la demande: 18.09.1991
(73) Titulaire: INSTITUT FRANCAIS DU PETROLE, 92502 Rueil-Malmaison (FR)
(72) Inventeur: Dawans, François, F-78380 Bougival (FR)

(56) Documents cités:
- DE-A- 2 146 903
- FR-A- 2 158 254
- FR-A- 2 290 483
- US-A- 4 028 293
- PATENT ABSTRACTS OF JAPAN, vol. 5, no. 94 (C-59)[766], 19 juin 1981;& JP-A-56 036 548

## Description

Les polymères sont couramment utilisés comme additifs dans les asphaltes et bitumes routiers ou industriels, soit pour améliorer leurs propriétés de mise en oeuvre en modifiant les propriétés rhéologiques à chaud, soit pour améliorer leurs propriétés physicochimiques (fragilité à froid, tenacité, flexibilité, stabilité, susceptibilité thermique, résistance mécanique, aux chocs, aux vibrations, à l'abrasion...).

En général, les polymères utilisés sont des thermoplastiques (polymères ou copolymères d'oléfines), des caoutchoucs et, en particulier, des élastomères thermoplastiques (copolymères multiséquencés de dioléfines et de styrène), ou, dans une moindre mesure, des résines thermodurcissables (polyuréthanes, époxy, phénol-formol). Selon l'art antérieur, ces polymères peuvent être utilisés seuls ou en mélanges. Par exemple, on a proposé de recycler, comme additifs dans les bitumes, des déchets de fabrication (cires de polyéthylène, polypropylène atactique, alcool polyvinylique, poudrettes de caoutchoucs vulcanisés...) ou des déchets plastiques provenant des ordures ménagères, et plus particulièrement, des emballages plastiques. Dans ce dernier cas, les mélanges de polymères contiennent essentiellement des polyoléfines, du polychlorure de vinyle, du polystyrène et du polyéthylène téréphthalate.

Les polymères sont ajoutés, en petites quantités (en général de 2 à 10 pourcent en poids) dans les bitumes, sous la forme de mélanges "simples" n'impliquant pas d'interaction ou de réaction chimique entre les constituants, ou sous la forme de mélanges "complexes" impliquant une interaction ou une réaction chimique entre le polymère et certains constituants du bitume (asphaltènes, maltènes, résines...), éventuellement en la présence d'un troisième constituant (catalyseur, réactif). Le plus souvent, les polymères sont dispersés à l'état solide ou fondu dans un excès de bitume préalablement chauffé, et, après agitation, les mélanges sont utilisés tels quels, à l'état fondu, ou refroidis à l'état solide, et éventuellement broyés ou granulés. Certains procédés pour la production d'un mélange, à l'état fondu, de bitumes routiers additionnés de polymères d'oléfines, recommandent l'addition d'au moins 5 à 30 pourcent en poids de particules minérales qui accélèrent la dissolution du polymère dans le bitume (voir, par exemple, le brevet US 3336252 publié le 15.8.1967). Le brevet US 4028293 publié le 7.6.1977 revendique la fabrication d'un matériau bitumé, utilisé notamment dans le domaine routier et la construction, et obtenu par réaction à haute température (au moins à 180°C) d'un composé minéral tel que du sable ou des graviers avec un polymère ou un mélange de polymères provenant de déchets domestiques ou ménagers. Le mélange résultant est ensuite ajouté, à chaud, dans du bitume et refroidi. Un inconvénient majeur de cette méthode est le coût final de l'opération qui nécessite un préchauffage à haute température d'une quantité importante de matière minérale avant l'addition du ou des polymère(s).

On connait également la demande japonaise JP-A-56-36548 publiée le 9.4.1981 qui décrit l'incorporation de particules de caoutchouc vulcanisé et de polyuréthane (élastomèrique ou expansé) dans les asphaltes, conjointement à un matériau minéral.

La présente invention concerne un procédé amélioré et économique pour le recyclage de déchets polymères dans les bitumes routiers ou industriels. Ce procédé convient particulièrement bien pour le recyclage de "stériles d'automobiles", c'est-à-dire des déchets plastiques provenant de la casse des automobiles, pouvant contenir éventuellement d'autres déchets polmères, en proportion mineure, par exemple provenant de la casse d'appareils électroménagers.

Le nom générique de "stériles d'automobiles" ou de "RBA" (résidus ou rebuts du broyage d'automobiles) désigne en fait l'ensemble des matériaux minéraux et organiques issus du broyage ou du déchiquetage en majorité de carcasses d'automobiles et, dans une moindre mesure, d'appareils électroménagers et de déchets industriels, et obtenus après la séparation des principaux matériaux métalliques, par exemple, à l'aide de tris magnétiques, par gravitation ou hydrocyclones, par flottation ou manuels. Ces matériaux métalliques récupérés sont couramment recyclés comme matières premières dans l'industrie métallurgique. Par contre, le recyclage des déchets "stériles" ou non-métalliques pose actuellement un problème majeur à cause de l'hétérogénéité du matériau. Il s'agit, en effet, d'un mélange de composition variable et constitué de particules minérales non-métalliques et de divers polymères tels que des expansés ou mousses, des caoutchoucs vulcanisés, des fibres synthétiques, des thermoplastiques et des résines thermodurcies.

Compte tenu de la quantité croissante de matériaux polymères employés lors de la construction des véhicules et des appareils électroménagers, il est devenu nécessaire de trouver de nouveaux moyens pour se débarrasser de ces matériaux "stériles", qui soient satisfaisants, à la fois sur le plan économique et sur le plan écologique, pour la protection de l'environnement. On a déjà proposé de faire disparaitre la majorité des "stériles d'automobiles" par l'incinération, comme dans le cas des ordures ménagères. Si la construction d'usines spécifiques d'incinération pour les "stériles d'automobiles" est possible au niveau technique, elle ne constitue pas actuellement la solution la plus satisfaisante d'un point de vue énergétique et sur le plan financier, compte tenu des sécurités écologiques à assurer notamment pour le dépoussiérage des fumées de combustion et la rétention des émanations de gaz toxiques ou corrosifs. Comme dans le cas des déchets plastiques provenant des emballages et des ordures ménagères, on a également envisagé le recyclage des "stériles d'automobiles" comme matières premières de seconde génération, utilisées seules ou en mélanges avec des matériaux "neufs" de première génération. Néanmoins, étant donné leur composition plus hétérogène, les emplois des "stériles d'automobiles" comme matériaux recyclés sont restés jusqu'à présent très limités et ils ne permettent pas d'envisager une application suffisamment importante pour se débarrasser de quantités croissantes de "stériles". Par conséquent, la plupart des "stériles d'automobiles" sont actuellement déversés dans des décharges protégées, ce qui implique des coûts de stockage de plus en plus élevés et ce qui constitue, malgré toutes les précautions prises, une solution peu satisfaisante pour la protection de l'environnement.

C'est la raison pour laquelle, l'emploi, selon l'invention, de "stériles d'automobiles" pour améliorer les propriétés des bitumes ou asphaltes routiers et industriels constitue un moyen utile et avantageux de recyclage, du moins si l'on dispose d'une technique simple et fiable pour la réalisation des mélanges. Contrairement aux procédés décrits dans l'art antérieur et limités essentiellement au recyclage de déchets plastiques ménagers dans les bitumes, le procédé amélioré selon la présente invention, permet la mise en oeuvre de mélanges plus hétérogènes et complexes de polymères, tels que les "stériles d'automobiles" ou "RBA".

Le bitume (asphalte) utilisé selon la présente invention est un constituant naturel des huiles minérales et des pétroles bruts; il est obtenu par désasphaltage, par exemple par précipitation au propane, ou par distillation de produits de raffinage (pitch) et/ou de craquage de produits pétroliers. Il peut également être obtenu à partir de goudrons issus du charbon.

Sans sortir du cadre de l'invention, on peut utiliser également un bitume fluxé, par exemple, à l'aide de distillats ou résidus aromatiques ou encore un bitume oxydé ou soufflé à l'air.

La principale originalité de la présente invention consiste à valoriser des mélanges complexes de polymères organiques produits lors du déchiquetage et broyage principalement d'automobiles et, dans une moindre mesure, d'appareils électroménagers et de déchets industriels, en les ajoutant aux liants bitumés ou asphaltiques et en améliorant certaines propriétés en vue notamment d'emplois dans les enrobés de matériaux solides tels que les graviers, les enduits ou les revêtements, en particulier dans le domaine routier, la construction, les travaux publics et les équipements spéciaux.

Le procédé selon l'invention a pour objet l'amélioration des propriétés physicochimiques et mécaniques de bitumes ou asphaltes par incorporation de résidus polymériques, notamment des stériles d'automobiles.

L'invention fournit donc un procédé pour l'obtention d'une composition bitumineuse renfermant des résidus polymèriques contenant au moins 4% en poids de mousses polyuréthanes et au moins 2% en poids de résines thermodurcies, caractérisé en ce que
l'on broie lesdits résidus polymèriques de manière à obtenir une taille de particules inférieure à 10 mm;
on mélange les résidus polymèriques broyés avec du bitume ou d'asphalte fondu, en une proportion de 1 à 40% en poids par rapport au bitume ou à l'asphalte;
on ajoute au mélange au moins un catalyseur consistant essentiellement en un acide de Lewis ou de Broensted en une proportion de 0,5 à 10% par rapport au poids total des résidus polymériques mélangés au bitume ou à l'asphalte, et/ou au moins un réactif consistant essentiellement en un oxyde alcalin ou alcalino-terreux, en une proportion de 2 à 20% en poids par rapport au poids total des résidus polymèriques mélangés au bitume ou à l'asphalte;
et on chauffe le mélange obtenu sous agitation à une température de 150 à 300°C pendant au moins 5 minutes.

Si nécessaire, les résidus polymériques sont préalablement lavés à l'eau pour éliminer la terre. Le produit, humide le cas échéant, est mélangé au bitume ou à l'asphalte fondu à une concentration variable en fonction des propriétés recherchées, comprise de préférence entre 2 et 15% en poids par rapport au poids de bitume ou de l'asphalte. Le mélange est chauffé de préférence à la pression atmosphérique. Le traitement de l'invention permet la dissolution de la plupart des polymères et l'élimination de l'eau de lavage. La présence d'au moins 4% en poids de mousses polyuréthanes dans les résidus polymériques facilite la dissolution des polymères et les particules broyées de résines thermodurcies par exemple de type époxy ou polyester, également présentes se comportent comme une charge contribuant également à augmenter la vitesse de dissolution des polymères.

Selon l'invention, l'acide de Lewis ou de Broensted ajouté peut être par exemple du chlorure ou du bromure d'aluminium, de l'étherate de trifluorure de bore ou de l'acide trifluoroacétique. Durant le chauffage à plus de 150°C durant 5 minutes au moins, le catalyseur provoque une réaction de couplage entre les polymères et certains constituants du bitume, ce qui confère au mélange final des propriétés améliorées telles que la stabilité, la susceptibilité thermique et la résistance aux vibrations et à l'abrasion.

Selon l'invention, l'oxyde de métal alcalin ou alcalino ajouté peut être par exemple l'oxyde de calcium.

Durant le chauffage à une température supérieure à 150°C, le réactif réagit avec certains polymères, par exemple, avec le polychlorure de vinyle en fixant le chlore et l'acide chlorhydrique dégagés et il conduit également à une réaction de couplage entre le polymère et certains constituants du bitume.

Lorsqu'une propriété spécifique est recherchée, on peut également, sans sortir du cadre de l'invention, ajouter dans le mélange de bitume et de stériles d'automobiles, une petite quantité, par exemple de 2 à 10 pourcent en poids par rapport au poids de bitume, d'un polymère ne se trouvant pas dans les stériles d'automobiles, tel que, par exemple, un copolymère d'oléfine et d'ester insaturé ou un caoutchouc thermoplastique à base de copolymères multiséquencés de styrène et de diène, éventuellement hydrogénés.

En particulier, l'invention concerne également l'utilisation d'une composition qui consiste à dissoudre ou disperser ladite composition dans un excès de bitume fondu, de façon à fournir une composition pour l'enrobage de matériaux solides.

Les exemples suivants illustrent l'invention.

### EXEMPLE 1 (comparatif)

Un mélange de stériles d'automobiles contenant environ 40 pourcent en poids de polychlorure de vinyle, 30 pourcent en poids de polyoléfines, 6 pourcent en poids de mousses polyuréthanes, 3 pourcent en poids de résines thermodurcies polyépoxy et polyesters et 21 pourcent en poids de divers autres polymères tels que des caoutchoucs est broyé dans un broyeur à couteaux, de manière à obtenir des particules de taille comprise entre 2 et 4 mm et le mélange poudreux obtenus est lavé à l'eau à la température ambiante.

8,8 kg de bitume ayant une pénétraoilité égale à 82 (mesurée selon la norme ASTM - DS) et une température de ramolissement égale à 54°C (mesurée selon la méthode Bille-Anneau ASTM - D 36) sont fondus par chauffage à 190°C. On ajoute, sous agitation, 1,2 kg de poudre humide de stériles d'automobiles et le mélange est malaxé durant 30 minutes en évacuant l'eau évaporée. On obtient de cette façon un mélange homogène qui peut être utilisé directement à l'état fondu ou refroidi et granulé selon une technique usuelle. La température de ramolissement du mélange est égale à 88°C.

### EXEMPLE 2

Si, dans l'exemple 1, toute chose étant égale par ailleurs, on ajoute 36g de trichlorure d'aluminium, on obtient un mélange final ayant une température de ramolissement égale à 108°C.

### EXEMPLE 3

Si, dans l'exemple 1, toute chose étant égale par ailleurs, on ajoute 96g d'oxyde de calcium, on obtient un mélange final ayant une température de ramolissement égale à 120°C.

### EXEMPLE 4

Si dans l'exemple 1 , toute chose étant égale par ailleurs, on ajoute 220g d'un copolymère triséquencé styrène-éthylène/butène-styrène (KRATON G), on obtient un mélange bitumineux ayant une température de ramolissement égale à 84°C dont les propriétés d'élasticité, de flexibilité à basse température et de résistance au vieillissement sont améliorées.

## Revendications

1. Procédé pour l'obtention d'une composition bitumineuse renfermant des résidus polymériques contenant au moins 4% en poids de mousses polyuréthanes et au moins 2% en poids de résines thermodurcies, caractérisé en ce que
l'on broie lesdits résidus polymèriques de manière à obtenir une taille de particules inférieure à 10 mm;
on mélange les résidus polymèriques broyés avec du bitume ou d'asphalte fondu, en une proportion de 1 à 40% en poids par rapport au bitume ou à l'asphalte;
on ajoute au mélange au moins un catalyseur consistant en un acide de Lewis ou de Broensted en une proportion de 0,5 à 10% par rapport au poids total des résidus polymériques mélangés au bitume ou à l'asphalte, et/ou au moins un réactif consistant en un oxyde alcalin ou alcalino-terreux, en une proportion de 2 à 20% en poids par rapport au poids total des résidus polymèriques mélangés au bitume ou à l'asphalte;
et on chauffe le mélange obtenu sous agitation à une température de 150 à 300°C pendant au moins 5 minutes.

2. Procédé selon la revendication 1, dans lequel les résidus polymériques sont des matériaux stériles provenant du déchiquetage et du broyage d'automobiles.

3. Procédé selon la revendication 1 ou 2, dans lequel on introduit dans le bitume ou l'asphalte fondu, porté à 150-300°C, les résidus polymèriques humides, préalablement lavés à l'eau.

4. Procédé selon l'une des revendications 1 à 3, caractérisé en ce que lesdits résidus polymèriques sont mélangés en une proportion de 2 à 15% en poids par rapport au bitume ou à l'asphalte.

5. Procédé selon l'une des revendications 1 à 4. caractérisé en ce que ledit catalyseur est du chlorure ou du bromure d'aluminium, de l'étherate de trifluorure de bore ou de l'acide trifluoroacétique.

6. Procédé selon l'une des revendications 1 à 5, caractérisé en ce que ledit réactif est de l'oxyde de calcium.

7. Procédé selon l'une des revendications 1 à 6, caractérisé en ce que l'on ajoute au mélange de 2 à 10% en poids d'au moins un copolymère d'oléfines et d'ester insaturé ou d'au moins un caoutchouc thermoplastique.

8. Procédé selon la revendication 7, caractérisé en ce que ledit caoutchouc thermoplastique est un copolymère multiséquencé de styrène et de diène, éventuellement hydrogéné.

9. Une composition bitumineuse telle qu'obtenue par un procédé selon l'une des revendications 1 à 9.

10. Utilisation d'une composition bitumineuse selon la revendication 9 qui consiste à dissoudre ou disperser ladite composition dans un excès de bitume fondu, de manière à fournir une composition pour l'enrobage de matériaux solides.

## Claims

1. Process for obtaining a bituminous composition containing polymer residues containing at least 4% by weight of polyurethane foams and at least 2% by weight of thermoset resins characterized in that
· said polymer residues are crushed to obtain a particle size lower than 10 mn;
· the crushed polymer residues are mixed with melted bitumen or asphalt in a proportion of 1 to 40% by weight based on the bitumen or asphalt;
· at least one catalyst consisting of a Lewis or Broensted acid is added to the mixture in a proportion of 0.5 to 10% by weight based on the total weight of the polymer residues mixed with the bitumen or asphalt, and/or at least one reagent consisting of an alkaline or alkaline-earth oxide in a proportion of 2 to 10% by weight based on the total weight of polymer residues mixed with the bitumen or asphalt:
· and the obtained mixture is heated under stirring at a temperature of 150-300°C during at least 5 minutes.

2. Process according to claim 1, wherein the polymer residues are sterile materials resulting from the crushing and cutting into pieces of cars.

3. Process according to claim 1 or 2, wherein the moist polymer residues, which have previously been washed with water, are introduced into the melted asphalt or bitumen, heated to 150 to 300°C.

4. Process according to any one of the claims 1 to 3, characterized in that the polymer residues are mixed in a proportion of 2 to 15% by weight, based on the bitumen or asphalt.

5. Process according to any one of the claims 1 to 4, characterized in that said catalyst is aluminum chloride or bromide, boron trifluoride etherate or trifluoroacetic acid.

6. Process according to any one of the claims 1 to 5, characterized in that said reagent is calcium oxide.

7. Process according to any one of the claim 1 to 6, characterized in that 2 to 10% by weight of at least one copolymer of olefins and unsaturated ester or at least a thermoplastic rubber is added to the mixture.

8. Process according to claim 7, characterized in that thermoplastic rubber is a multiblock copolymer of styrene and diene, optionally hydrogenated.

9. A bituminous composition obtained according to the process of any one of the claims 1 to 8.

10. Use of a bituminous composition according to claim 9 consisting of dissolving or dispersing the said composition in a melted bitumen excess, so as to provide a composition for coating solid materials.

## Patentansprüche

1. Verfahren zur Herstellung einer bituminösen Zusammensetzung, welche polymere Rückstände umfaßt, die wenigstens 4 % Polyurethanschäume und wenigstens 2 Gew.% hitzehärtbare Harze enthalten, dadurch gekennzeichnet, daß
man die polymeren Rückstände derart zermahlt, daß man eine Teilchengröße von unter 10 mm erhält;
man die zermahlenen polmeren Rückstände mit geschmolzenem Bitumen oder Asphalt in einem Verhältnis von 1 bis 40 Gew.%, bezogen auf Bitumen oder auf Asphalt, vermischt;
man der Mischung Wenigstens einen Katalysator, der aus einer Lewis- oder Broenstedsäure besteht, in einem Verhältnis von 0,5 bis 10 %, bezogen auf das Gesamtgewicht der mit Bitten oder Asphalt vermischten polymeren Rückstände, und/oder wenigstens ein Reagenz, das aus einem Alkali- oder Erdalkalioxid besteht, in einem Verhältnis von 2 bis 20 Gew.%, bezogen auf das Gesamtgewicht der mit Bitumen oder Asphalt vermischten polymeren Rückstände, zusetzt;
und man die erhaltene Mischung unter Rühren bei einer Temperatur von 150 bis 300°C während Wenigstens 5 Minuten erhitzt,

2. Verfahren nach Anspruch 1, worin die polymeren Rückstände Sterilmaterialien sind, welche aus dem Zerschreddern und Zermahlen von Automobilen herstammen.

3. Verfahren nach Anspruch 1 oder 2, worin man in den auf 150 bis 300°C gebrachten geschmolzenen Bitumen oder Asphalt vorher mit Wasser gewaschene feuchte polymere Rückstände einführt.

4. Verfahren nach einem der Ansprüche 1 bis 3, dadurch gekennzeichnet, daß die polymeren Rückstände in einem Verhältnis von 2 bis 15 Gew.%, bezogen auf Bitten oder Asphalt, vermischt werden.

5. Verfahren nach einem der Ansprüche 1 bis 4, dadurch gekennzeichnet, daß der Katalysator Aluminiumchlorid oder -bromid, Bortrifluoridetherat oder Trifluoressigsäure ist.

6. Verfahren nach einem der Ansprüche 1 bis 5, dadurch gekennzeichnet, daß das Reagenz Calciumoxid ist.

7. Verfahren nach einem der Ansprüche 1 bis 6, dadurch gekennzeichnet, daß man der Mischung 2 bis 10 Gew.% wenigstens eines Copolymeren aus Olefinen und ungesättigtem Ester oder wenigstens eines thermoplastischen Kautschuk zufügt.

8. Verfahren nach Anspruch 7, dadurch gekennzeichnet, daß der thermoplastische Kautschuk ein Multisequenzcopolymer aus Styrol und Dien, gegebenenfalls hydriert, ist.

9. Eine bituminöse Zusammensetzung wie durch ein Verfahren nach einem der Ansprüche 1 bis 9 erhalten.

10. Verwendung einer bituminösen Zusammensetzung nach Anspruch 9, die darin besteht, die Zusammensetzung in einem Überschuß geschmolzenen Bitumens derart aufzulösen oder zu dispergieren um eine Zusammensetzung zur Verkleidung von Festmaterialien zu liefern.
